# EUROPÄISCHE PATENTSCHRIFT

(11) **EP 3 714 255 B1**
(45) Veröffentlichungstag und Bekanntmachung des Hinweises auf die Patenterteilung: **11.05.2022**
(21) Anmeldenummer: 18788734.4
(22) Anmeldetag: 15.10.2018
(51) Int. Cl.: G01N 19/04, B44B 3/00

(54) **VERFAHREN ZUR ERZEUGUNG UND MESSUNG VON SPANNUNGSRISSKORROSION AN EINEM FLÄCHIGEN BESCHICHTETEN PRÜFKÖRPER UND VERWENDUNG EINER GRAVIERVORRICHTUNG ZUR DURCHFÜHRUNG DES VERFAHRENS**
METHOD FOR CREATING AND MEASURING STRESS CORROSION CRACKING ON A FLAT COATING TEST SPECIMEN AND USE OF AN ENGRAVING DEVICE FOR CARRYING OUT THE METHOD
PROCÉDÉ DE GÉNÉRATION ET DE MESURE D'UNE CORROSION DE FISSURE PAR CONTRAINTE SUR UN ÉCHANTILLON REVÊTU PLAT ET UTILISATION D'UN DISPOSITIF DE GRAVURE POUR EFFECTUER LE PROCÉDÉ

(30) Priorität: 23.11.2017 DE 102017220946
(43) Veröffentlichungstag der Anmeldung: 30.09.2020
(73) Patentinhaber: Robert Bosch GmbH, 70442 Stuttgart (DE)
(72) Erfinder: BRAAK, Richard, 70195 Stuttgart (DE); MAY, Ulrich, 71277 Rutesheim (DE)
(86) Internationale Anmeldenummer: PCT/EP2018/077986
(87) Internationale Veröffentlichungsnummer: WO 2019/101435

(56) Entgegenhaltungen:
- GB-A- 2 296 788
- US-A- 4 561 814
- US-A1- 2017 182 837
- N.X. RANDALL ET AL: "The effect of intrinsic parameters on the critical load as measured with the scratch test method", SURFACE AND COATINGS TECHNOLOGY, Bd. 137, Nr. 2-3, 1. März 2001 (2001-03-01), Seiten 146-151, XP055541169, AMSTERDAM, NL ISSN: 0257-8972, DOI: 10.1016/S0257-8972(00)01097-5
- WARCHOLINSKI B ET AL: "Multilayer coatings on tools for woodworking", WEAR, ELSEVIER SEQUOIA, LAUSANNE, CH, Bd. 271, Nr. 11, 20. Mai 2011 (2011-05-20) , Seiten 2812-2820, XP028257995, ISSN: 0043-1648, DOI: 10.1016/J.WEAR.2011.05.048 [gefunden am 2011-06-12]

## Beschreibung

Die Erfindung betrifft ein Verfahren zur Erzeugung und Messung von Spannungsrisskorrosion an einem flächigen hierauf aufgebrachtes Schichtsystem mit einer an die Grundkörperoberfläche angrenzende Grenzfläche aufweist. Ferner betrifft die Erfindung eine Graviervorrichtung zur Durchführung eines solchen Verfahrens.

### Stand der Technik

Aus dem allgemeinen Stand der Technik sind Verfahren zur Messung einer Schichthaftung auf einem Erzeugnis mit einer Beschichtung bekannt, wobei die Beschichtung aus Substratmaterialien mit dünnen Beschichtungen besteht. Bei der Beschichtung kann es sich um eine Beschichtung eines Werkzeuges oder einer Komponente eines mechanischen Systems mit dem Ziel des Verschleißschutzes handeln. Darüber hinaus können derartige Beschichtungen als Korrosionsschutzbeschichtungen oder dekorative Beschichtungen ausgebildet sein, wobei die Beschichtung mittels eines Spritz- oder Lackierverfahrens, oder mittels eines galvanischen oder Plasmabeschichtungsverfahrens auf das Erzeugnis aufgebracht sind. Als Messverfahren zur Messung der Schichthaftung der Beschichtung sind beispielsweise die Messung der Schichthaftung mittels Rockwell Indentation gemäß VDI-Richtlinie 3198, der Scratchtest nach DIN EN 1071-3 oder der Taber-Abraser-Test bekannt. Mittels der Messverfahren zur Messung der Schichthaftung wird eine mechanische Belastung auf die Schicht-Substrat-Grenzfläche erzeugt, um ein Ablösen der Beschichtung bei ungenügender Schichtqualität zu provozieren. Die Stelle mechanischer Belastung wird mit lichtoptischen Verfahren begutachtet und das visuelle Erscheinungsbild der Enthaftung mit einem Vergleichskatalog subjektiv bewertet.

Ein weiteres Verfahren ist aus N.X. Randall et al: "The effect of intrinsic parameters on the critical load as measured with the scratch test method", SURFACE AND COATINGS TECHNOLOGY, Bd. 137, Nr. 2-3, Seiten 146-151, bekannt.

Ausgehend von dem vorstehend genannten Stand der Technik liegt der vorliegenden Erfindung die Aufgabe zugrunde, eine Graviervorrichtung und ein Verfahren zur Erzeugung und Messung von Spannungsrisskorrosion an einem flächigen beschichteten Prüfkörper weiterzuentwickeln, und insbesondere eine einfache flächige Prüfung eines Prüfkörpers hinsichtlich Spannungsrisskorrosion bereitzustellen. Die Aufgabe wird gelöst durch den Gegenstand der Ansprüche 1 und 4. Bevorzugte Ausführungsformen sind den abhängigen Ansprüchen zu entnehmen.

### Offenbarung der Erfindung

Gemäß einem erfindungsgemäßen Verfahren zur Erzeugung und Messung von Spannungsrisskorrosion an einem flächigen beschichteten Prüfkörper, der einen Grundkörper mit einer Grundkörperoberfläche und ein Schichtsystem mit einer an die Grundkörperoberfläche angrenzende Grenzfläche aufweist, wird eine mechanische Belastung in eine Prüfkörperoberfläche mittels eines rotierbaren Gravierkopfs einer Graviervorrichtung eingebracht, wobei der Gravierkopf mit einer konstanten Anpresskraft und einer konstanten Rotationsgeschwindigkeit zumindest teilweise in das Schichtsystem eindringt. Anschließend wird der rotierende Gravierkopf mit einer konstanten Verfahrgeschwindigkeit entlang der Prüfkörperoberfläche und relativ zum Prüfkörper bewegt und zumindest eine Gravur durch plastische Verformungen und/oder sprödes Ausbrechen des Schichtsystems auf der Prüfkörperoberfläche erzeugt. Danach wird die zumindest eine in die Prüfkörperoberfläche eingebrachte Gravur durch ein lichtoptisches Verfahren gemessen, um eine Schichthaftung des Schichtsystems auf dem Grundkörper auszuwerten. Zunächst wird mit anderen Worten der Gravierkopf durch eine Antriebseinheit in eine Rotation mit vorzugsweise konstanter Rotationsgeschwindigkeit versetzt und anschließend mit einer konstanten Anpresskraft auf die Prüfkörperoberfläche gedrückt. Nachfolgend wird der Gravierkopf mit einer konstanten Verfahrgeschwindigkeit über die Prüfkörperoberfläche geführt, wodurch eine Gravur im Prüfkörper entsteht. Alternativ kann auch der Probentisch, auf dem der Prüfkörper fixiert ist, verlagert werden. Vorzugsweise ist der Probentisch in diesem Fall dreidimensional positionierbar, um den Prüfkörper in Richtung des rotierenden Gravierkopfs sowie in eine beliebige Richtung in Tischebene zu verfahren, um die zumindest eine Gravur zu erzeugen.

Vorzugsweise werden die Anpresskraft und die Rotationsgeschwindigkeit des Gravierkopfs sowie die Verfahrgeschwindigkeit des Probentisches beziehungsweise des Gravierkopfes mittels einer Steuereinheit überwacht und gesteuert. Mittels der Steuereinheit können somit eine oder mehrere Gravuren auf einer vergleichsweise großen Fläche der Prüfkörperoberfläche erzeugt werden, um in einem Nachgang mittels lichtoptischer Verfahren die Schichthaftung des Schichtsystems in der Grenzfläche zwischen der Grundkörperoberfläche und dem Schichtsystem zu ermitteln. Die Anpresskraft ist derart groß gewählt, dass der Grundkörper mindestens teilweise freigelegt wird, jedoch zu große plastische Verformungen vermieden werden. Die maximale mechanische Spannung liegt vorteilhafterweise in Grenzflächennähe zwischen dem Schichtsystem und dem Grundkörper vor. Vorzugsweise liegt die Anpresskraft in einem Bereich zwischen 0,1 und 5 N. Die Rotationsgeschwindigkeit des Gravierkopfes liegt bevorzugt bei mindestens 5.000 und maximal 30.000 Umdrehungen pro Minute. Die Verfahrgeschwindigkeit des Gravierkopfes beziehungsweise des Probentisches ist abhängig von der Schichtdicke des Schichtsystems, wobei die Verfahrgeschwindigkeit mit steigender Schichtdicke abnimmt. Alternativ kann mit steigender Schichtdicke auch ein größerer Gravierkopf eingesetzt werden. Die Verfahrgeschwindigkeit liegt vorzugsweise zwischen 1 und 10 cm/s.

Mit anderen Worten kann mittels dieses Verfahrens durch großflächige Analysen der Prüfkörperoberfläche eine Enthaftung des Schichtsystems vom Grundkörper analysiert werden. Vorteilhaft ist dabei, dass eine flächige Prüfung des Prüfkörpers im Hinblick auf Spannungsrisskorrosion und Enthaftung mit geringem Aufwand durchgeführt werden kann, wobei darüber hinaus nur geringe Anforderungen an die Prüfkörpergeometrie gestellt werden. Mithin ist die Prüfkörperoberfläche eben ausgebildet.

Ferner kann das Verfahren zur Erzeugung und Messung von Spannungsrisskorrosion durch geeignete Anpassung der Graviervorrichtung bei hohen und/oder tiefen Temperaturen durchgeführt werden. Mit anderen Worten kann mittels einer solchen Graviervorrichtung die Messung einer Hoch- und Tieftemperaturhaftung des Schichtsystems durchgeführt werden.

Das Schichtsystem ist vorzugsweise einschichtig ausgebildet, wobei auch mehrschichtige Schichtsysteme, beispielsweise bestehend aus einer wasserstoffhaltigen amorphen Kohlenstoffschicht (a-C:H) und einer Titan-Zwischenschicht, denkbar sind. Die Titan-Zwischenschicht dient dabei insbesondere als Haftvermittlerschicht und ist zwischen dem Grundkörper, der vorzugsweise ein Stahlwerkstoff ist, und der Kohlenstoffschicht angeordnet.

Durch die Belastung der Prüfkörperoberfläche kommt es zu einer gezielten Überlast im Schichtsystem, die zu einem Schaden infolge Schichtzerrüttung und Enthaftung führt. Derartige Schäden führen zu einer hohen Anfälligkeit gegenüber Spannungsrisskorrosion. Die Spannungsrisskorrosion zeigt sich bevorzugt bei spröden Beschichtungen metallischer Bauteile, insbesondere bei Dünnschichten. Die Krafteinleitung erfolgt dabei insbesondere in Grenzflächennähe zwischen dem Grundkörper und dem Schichtsystem. Mithin wird durch die Belastung eine lokale Überlastung, das heißt eine plastische Verformung der Prüfkörperoberfläche in Kombination mit großen Scherkräften am Prüfkörper erzeugt. Dabei kommt es zu schichtinternen Brüchen, die auch Schicht-in-Schicht-Enthaftungen genannt werden, und schlussendlich zur Enthaftung des Schichtsystems vom Grundkörper führen. Die Hafteigenschaften des Schichtsystems oder der Beschichtung sind abhängig von der chemischen Beständigkeit des Schichtsystems. Bei mehrschichtigen Beschichtungen sind die Hafteigenschaften insbesondere abhängig von der chemischen Beständigkeit der Grenzfläche der Haftvermittlerschicht und der Deckschicht.

Gemäß einer die Erfindung weiter verbessernden Maßnahme wird vorgeschlagen, dass die Prüfkörperoberfläche zumindest teilweise mit einem korrosiven Medium zur Beschleunigung einer Spannungsrisskorrosion des Prüfkörpers durch lokale Enthaftungen zwischen dem Schichtsystem und dem Grundkörper des Prüfkörpers bedeckt wird. Danach wird die zumindest eine in die Prüfkörperoberfläche eingebrachte Gravur nach der Beschleunigung der Spannungsrisskorrosion mittels des korrosiven Mediums durch ein lichtoptisches Verfahren gemessen und die Schichthaftung des Schichtsystems auf dem Grundkörper ausgewertet. Mit anderen Worten wird die Prüfkörperoberfläche insbesondere nach Erzeugung der Gravuren dem korrosiven Medium ausgesetzt. Dabei kann der Prüfkörper in einen separaten Behälter eingelegt werden, der das korrosive Medium aufweist und für eine bestimmte Dauer mit bestimmten Versuchsparametern, wie beispielsweise Temperatur des Mediums oder aber stehendes oder bewegliches korrosives Medium, gelagert wird. Je länger der Prüfkörper dem korrosiven Medium ausgesetzt wird, desto stärker ist der hervorgerufene Effekt der Spannungsrisskorrosion. Das korrosive Medium eignet sich daher insbesondere, um eine Schädigung des Prüfkörpers aufgrund Spannungsrisskorrosion, das heißt eine Delamination des Schichtsystems zu beschleunigen. Dadurch kann der Prüfkörper anwendungsbezogen untersucht werden. Als korrosives Medium eignen sich insbesondere ein Kraftstoff oder Harnstoff, eine Körperflüssigkeit oder Wasser. Ferner sind auch Säuren oder Laugen als korrosives Medium geeignet.

Neben der Messung der Enthaftung können mittels des beschriebenen Verfahrens weitere Schichteigenschaften des Schichtsystems, wie beispielsweise die Sprödheit des Schichtsystems analysiert und charakterisiert werden.

Eine Graviervorrichtung zur Durchführung eines Verfahrens zur Erzeugung und Messung von Spannungsrisskorrosion an einem flächigen Prüfkörper umfasst einen dreidimensional verfahrbaren Probentisch zur Aufnahme des Prüfkörpers und einen rotierbaren Gravierkopf, der dazu vorgesehen ist, einen Prüfkörper mit einer definierten Anpresskraft und einer definierten Rotationsgeschwindigkeit zu belasten. Mithin wird der Gravierkopf über die Prüfkörperoberfläche geführt, um zumindest eine Gravur auf dem Prüfkörper zu erzeugen. Alternativ kann auch der Gravierkopf dreidimensional verfahrbar ausgebildet sein, um den Prüfkörper mit der Anpresskraft zu beaufschlagen und um über die Prüfkörperoberfläche geführt zu werden. Der Prüfkörper ist dabei ortsfest am unbeweglichen Probentisch angeordnet. Die Graviervorrichtung wird insbesondere zur Durchführung des zuvor beschriebenen Verfahrens zur Erzeugung und Messung von Spannungsrisskorrosion an einem flächigen Prüfkörper verwendet.

Gemäß einem bevorzugten Ausführungsbeispiel weist der Gravierkopf eine Diamantbeschichtung auf. Somit weist der Gravierkopf eine höhere Härte auf als der Prüfkörper und ist daher insbesondere dazu geeignet, die zumindest eine Gravur auf der Prüfkörperoberfläche zu erzeugen. Vorzugsweise ist der Gravierkopf kugelförmig ausgebildet, wobei der Gravierkopf auch scheibenförmig ausgebildet sein kann.

Die Erfindung schließt die technische Lehre ein, dass ein Lichtmikroskop zur lichtoptischen Messung und Auswertung der zumindest einen in die Prüfkörperoberfläche eingebrachten Gravur vorgesehen ist. Vorzugsweise ermöglicht das Lichtmikroskop eine 30-fache bis 300-fache Vergrößerung. So können bereits unmittelbar nach dem Erzeugen der zumindest einen Gravur Haftungsinformationen des Schichtsystems gewonnen werden.

Im Folgenden ein bevorzugtes Ausführungsbeispiel der Erfindung anhand der beiden Figuren näher erläutert. Hierbei zeigt
- Fig. 1: eine vereinfachte schematische Ansicht einer Graviervorrichtung vor einem Gravierprozess, und
- Fig. 2: eine schematische Detailschnittdarstellung eines Prüfkörpers während des Gravierprozesses.

### Ausführliche Beschreibung der Zeichnung

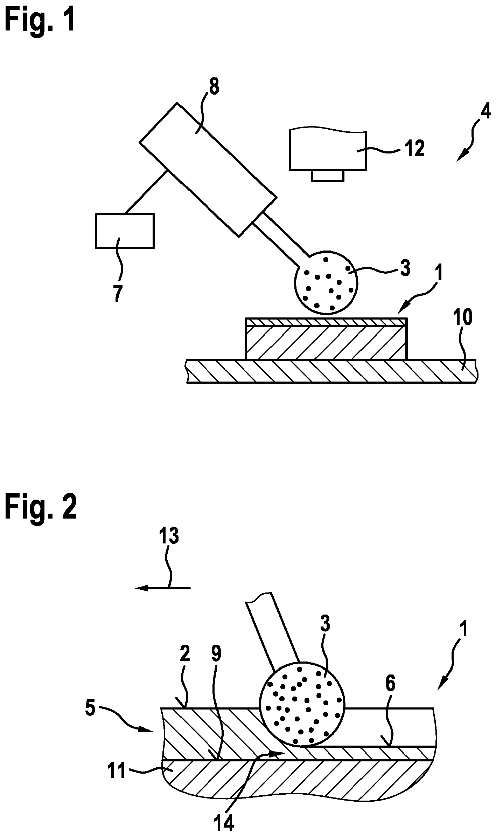

Gemäß Figur 1 umfasst eine Graviervorrichtung 4 zur Durchführung eines Verfahrens zur Erzeugung und Messung von Spannungsrisskorrosion einen dreidimensional verfahrbaren Probentisch 10 zur Aufnahme eines flächigen beschichteten Prüfkörpers 1 sowie einen rotierbaren Gravierkopf 3. Der Gravierkopf 3 weist eine Diamantbeschichtung auf und ist vorliegend kugelförmig ausgebildet. Alternativ kann der Gravierkopf 3 auch scheibenförmig ausgebildet sein. Vorliegend ist die Graviervorrichtung 4 unmittelbar vor dem Verfahren zur Erzeugung und Messung von Spannungsrisskorrosion am Prüfkörper 1 dargestellt. Der Gravierkopf 3 ist mittels einer Antriebseinheit 8 antreibbar und dazu vorgesehen, den Prüfkörper 1 mit einer konstanten Anpresskraft und einer konstanten Rotationsgeschwindigkeit zu belasten. Ferner weist die Graviervorrichtung 4 ein Lichtmikroskop 12 zur lichtoptischen Auswertung zumindest einer in die Prüfkörperoberfläche 2 eingebrachten und in Figur 2 dargestellten Gravur 6. In einem ersten Schritt wird der Probentisch 10 entgegen dem rotierenden Gravierkopf 3 verlagert, bis die erforderliche Anpresskraft eingestellt ist.

Nach Figur 2 wird die Gravur 6 in einem nachfolgenden Schritt durch ein Bewegen des Gravierkopfes 3 in einer Gravierrichtung 13 relativ zum Prüfkörper 1 in eine Prüfkörperoberfläche 2 erzeugt. Der Probentisch 10 wird dabei mit einer konstanten Verfahrgeschwindigkeit relativ zum Prüfkörper 1 bewegt. Alternativ kann auch der Gravierkopf 3 mit einer konstanten Verfahrgeschwindigkeit relativ zum Prüfkörper 1 verfahren werden, wobei der Prüfkörper 1 in diesem Fall ortsfest am unbeweglichen Probentisch 10 festgelegt ist. Der Prüfkörper 1 besteht im Wesentlichen aus einem Grundkörper 11 und weist ein Schichtsystem 5 auf der Grundkörperoberfläche 9 auf. Das Schichtsystem 5 ist vorliegend einschichtig ausgebildet. Es ist aber auch ein mehrschichtiges Schichtsystem 5 denkbar. Der Gravierkopf 3 leitet die Anpresskraft insbesondere in eine Grenzfläche 14 zwischen dem Grundkörper 11 und dem Schichtsystem 5 ein. Alternativ kann der Gravierkopf 3 leitet die Anpresskraft auch in Grenzflächennähe zwischen dem Grundkörper 11 und dem Schichtsystem 5 einleiten. Mit anderen Worten erfolgt die Krafteinleitung im Bereich der Grundkörperoberfläche 9. Die erzeugte Gravur 6 kann anschließend mittels des Lichtmikroskops 12 gemäß Figur 1 untersucht und hinsichtlich einer Schichthaftung des Schichtsystems 5 beziehungsweise einer Enthaftung des Schichtsystems 5 vom Prüfkörper 1 analysiert und ausgewertet werden.

Darüber hinaus kann in einem weiteren Schritt ein korrosives Medium auf den Prüfkörper 1 aufgebracht werden, um die Spannungsrisskorrosion im Schichtsystem 5 anzuregen und den Korrosionsprozess zur Messung der Enthaftung des Schichtsystems 5 zu beschleunigen. Der Korrosionsprozess ist dabei insbesondere abhängig von der Dauer und der Temperatur des korrosiven Mediums. Das Lichtmikroskop 12 gemäß Figur 1 kann ebenfalls eingesetzt werden, um die Gravur 6 des Prüfkörpers 1 nach einem Korrosionsprozesses mittels des korrosiven Mediums zu untersuchen. Die Größe und Häufigkeit der mittels des Lichtmikroskops 12 erkennbaren Enthaftungen auf der Prüfkörperoberfläche 2 geben Aufschluss über die Hafteigenschaften des Schichtsystems 5. Außerdem ist möglich die Geschwindigkeit eines etwaigen Delaminationsfortschritts, also eines Enthaftungsfortschritts durch einen Vergleich von Delaminationsfronten zu entsprechenden Zeitpunkten in Abhängigkeit der Zeitskala der Spannungsrisskorrosion bestimmt werden. Ferner kann die Geschwindigkeit der Enthaftung in Abhängigkeit des korrosiven Medium ermittelt werden. Mithin korreliert die Delaminationsgeschwindigkeit mit der Geschwindigkeit der Spannungsrisskorrosion entlang der Grenzfläche 14.

## Patentansprüche

1. Verfahren zur Erzeugung und Messung von Spannungsrisskorrosion an einem flächigen beschichteten Prüfkörper (1), der einen Grundkörper (11) mit einer Grundkörperoberfläche (9) und ein hierauf aufgebrachtes Schichtsystem (5) mit einer an die Grundkörperoberfläche (9) angrenzende Grenzfläche (14) aufweist, umfassend folgende Schritte:
- Einbringen einer mechanischen Belastung in eine Prüfkörperoberfläche (2) mittels eines rotierbaren Gravierkopfs (3) einer Graviervorrichtung (4), wobei der Gravierkopf (3) mit einer konstanten Anpresskraft und einer konstanten Rotationsgeschwindigkeit zumindest teilweise in das Schichtsystem (5) eindringt;
- Bewegen des rotierenden Gravierkopfs (3) entlang der Prüfkörperoberfläche (2) und relativ zum Prüfkörper (1) mit einer konstanten Verfahrgeschwindigkeit, zum Erzeugen zumindest einer Gravur (6) durch plastische Verformungen und/oder sprödes Ausbrechen des Schichtsystems (5) auf der Prüfkörperoberfläche (2);
- Messung der zumindest einen in die Prüfkörperoberfläche (2) eingebrachten Gravur (6) durch ein lichtoptisches Verfahren zum Auswerten der Schichthaftung des Schichtsystems (5) auf dem Grundkörper (11).

2. Verfahren nach Anspruch 1,
**dadurch gekennzeichnet, dass** die Anpresskraft und die Rotationsgeschwindigkeit des Gravierkopfs (3) mittels einer Steuereinheit (7) überwacht und gesteuert werden.

3. Verfahren nach einem der vorhergehenden Ansprüche, das Verfahren ferner aufweisend folgende Schritte:
- Zumindest teilweises Bedecken der Prüfkörperoberfläche (2) mit einem korrosiven Medium zur Beschleunigung einer Spannungsrisskorrosion des Prüfkörpers (1) durch lokale Enthaftungen zwischen dem Schichtsystem (5) und dem Grundkörper (11) des Prüfkörpers (1);
- Messung der zumindest einen in die Prüfkörperoberfläche (2) eingebrachten Gravur (6) nach der Beschleunigung der Spannungsrisskorrosion durch ein lichtoptisches Verfahren zum Auswerten der Schichthaftung des Schichtsystems (5) auf dem Grundkörper (11).

4. Verwendung einer Graviervorrichtung (4), umfassend einen dreidimensional verfahrbaren Probentisch (10) zur Aufnahme des Prüfkörpers (1) und einen rotierbaren Gravierkopf (3), der dazu vorgesehen ist, den Prüfkörper (1) mit einer definierten Anpresskraft und einer definierten Rotationsgeschwindigkeit zu belasten und eine Gravur (6) in eine Prüfkörperoberfläche (2) zu erzeugen, zur Durchführung eines Verfahrens nach einem der Ansprüche 1 bis 3.

5. Verwendung nach Anspruch 4,
**dadurch gekennzeichnet, dass** der Gravierkopf (3) der Graviereinrichtung (4) eine Diamantbeschichtung aufweist.

6. Verwendung nach einem der Ansprüche 4 oder 5,
**dadurch gekennzeichnet, dass** der Gravierkopf (3) der Graviereinrichtung (4) kugelförmig ausgebildet ist.

7. Verwendung nach einem der Ansprüche 4 oder 5,
**dadurch gekennzeichnet, dass** der Gravierkopf (3) der Graviereinrichtung (4) scheibenförmig ausgebildet ist.

8. Verwendung nach einem der Ansprüche 4 bis 7,
**dadurch gekennzeichnet, dass** die Graviereinrichtung (4) mit einem Lichtmikroskop (12) zur lichtoptischen Messung und Auswertung der zumindest einen in die Prüfkörperoberfläche (2) eingebrachten Gravur (6) versehen ist.

## Claims

1. Method for creating and measuring stress corrosion cracking on a flat coated test specimen (1) which has a basic body (11) with a basic body surface (9) and, applied thereto, a layer system (5) with a boundary surface (14) adjoining the basic body surface (9), comprising the following steps:
- introducing a mechanical load into a test specimen surface (2) by means of a rotatable engraving head (3) of an engraving device (4), wherein the engraving head (3) at least partially penetrates into the layer system (5) with a constant pressing force and at a constant rotational speed;
- moving the rotating engraving head (3) along the test specimen surface (2) and relative to the test specimen (1) at a constant movement speed in order to create at least one engraving (6) on the test specimen surface (2) by plastic deformations and/or brittle chipping of the layer system (5);
- measuring the at least one engraving (6) introduced into the test specimen surface (2) by a light-optical method for evaluating the layer adhesion of the layer system (5) on the basic body (11).

2. Method according to Claim 1,
**characterized in that** the pressing force and the rotational speed of the engraving head (3) are monitored and controlled by means of a control unit (7) .

3. Method according to either of the preceding claims, the method further comprising the following steps:
- at least partially covering the test specimen surface (2) with a corrosive medium in order to accelerate a stress corrosion cracking of the test specimen (1) by local delaminations between the layer system (5) and the basic body (11) of the test specimen (1);
- after the acceleration of the stress corrosion cracking, measuring the at least one engraving (6) introduced into the test specimen surface (2) by a light-optical method for evaluating the layer adhesion of the layer system (5) on the basic body (11) .

4. Use of an engraving device (4), comprising a three-dimensionally movable sample table (10) for receiving the test specimen (1) and also comprising a rotatable engraving head (3) which is provided to load the test specimen (1) with a defined pressing force and at a defined rotational speed and to create an engraving (6) in a test specimen surface (2), for carrying out a method according to one of Claims 1 to 3.

5. Use according to Claim 4,
**characterized in that** the engraving head (3) of the engraving device (4) has a diamond coating.

6. Use according to either of Claims 4 and 5,
**characterized in that** the engraving head (3) of the engraving device (4) is spherical.

7. Use according to either of Claims 4 and 5,
**characterized in that** the engraving head (3) of the engraving device (4) is disc-shaped.

8. Use according to one of Claims 4 to 7,
**characterized in that** the engraving device (4) is provided with a light microscope (12) for the light-optical measurement and evaluation of the at least one engraving (6) introduced into the test specimen surface (2).

## Revendications

1. Procédé de production et de mesure de fissurations par corrosion sous contrainte sur un corps d'essai (1) qui est sensiblement bidimensionnel et pourvu d'un revêtement et qui comporte un corps de base (11) pourvu d'une surface de corps de base (9) et un système de couches (5) appliqué sur celle-ci avec une interface (14) adjacente à la surface de corps de base (9), ledit procédé comprenant les étapes suivantes :
- introduire une charge mécanique dans une surface de corps d'essai (2) au moyen d'une tête de gravure rotative (3) d'un dispositif de gravure (4), la tête de gravure (3) pénétrant au moins partiellement dans le système de couches (5) avec une force de pressage constante et une vitesse de rotation constante ;
- déplacer la tête de gravure rotative (3) le long de la surface de corps d'essai (2) et par rapport au corps d'essai (1) à une vitesse de déplacement constante pour réaliser au moins une gravure (6) par déformation plastique et/ou par rupture cassante du système de couches (5) sur la surface de corps d'essai (2) ;
- mesurer l'au moins une gravure (6) introduite dans la surface de corps d'essai (2) à l'aide d'un procédé photo-optique pour évaluer l'adhérence du système de couches (5) au corps de base (11).

2. Procédé selon la revendication 1, **caractérisé en ce que** la force de pressage et la vitesse de rotation de la tête de gravure (3) sont surveillées et commandées au moyen d'une unité de commande (7).

3. Procédé selon l'une des revendications précédentes, le procédé comportant en outre les étapes suivantes :
- recouvrir au moins partiellement la surface de corps d'essai (2) d'un milieu corrosif destiné à accélérer la fissuration par corrosion sous contrainte du corps d'essai (1) par détachement local entre le système de couches (5) et le corps de base (11) du corps d'essai (1) ;
- mesurer l'au moins une gravure (6), introduite dans la surface de corps d'essai (2), après accélération de la fissuration par corrosion sous contrainte, par un procédé photo-optique pour évaluer l'adhérence des couches du système de couches (5) sur le corps de base (11).

4. Utilisation d'un dispositif de gravure (4) comprenant une table d'échantillon (10) déplaçable dans trois dimensions et destinée à recevoir le corps d'essai (1) et une tête de gravure rotative (3) qui est prévue pour contraindre le corps d'essai (1) avec une force de pressage définie et une vitesse de rotation définie et réaliser une gravure (6) dans une surface de corps d'essai (2), afin de mettre en œuvre un procédé selon l'une des revendications 1 à 3.

5. Utilisation selon la revendication 4, **caractérisée en ce que** la tête de gravure (3) du dispositif de gravure (4) comporte un revêtement en diamant.

6. Utilisation selon l'une des revendications 4 ou 5, **caractérisé en ce que** la tête de gravure (3) du dispositif de gravure (4) est sphérique.

7. Utilisation selon l'une des revendications 4 ou 5, **caractérisée en ce que** la tête de gravure (3) du dispositif de gravure (4) est discoïdale.

8. Utilisation selon l'une des revendications 4 à 7, **caractérisée en ce que** le dispositif de gravure (4) est pourvu d'un microscope optique (12) destiné à la mesure photo-optique et à l'évaluation de l'au moins une gravure (6) réalisée dans la surface de corps d'essai (2) .
